# EUROPÄISCHE PATENTANMELDUNG

(11) **EP 1 338 443 A2**
(43) Veröffentlichungstag der Anmeldung: **27.08.2003**
(21) Anmeldenummer: 02027343.9
(22) Anmeldetag: 07.12.2002
(51) Int. Cl.: B60C 23/00

(54) **Drehdurchführung für eine Vorrichtung zum Füllen oder Entlüften eines Reifens eines Traktorrades**

(30) Priorität: 26.02.2002 DE 10208024
(71) Anmelder: GKN Walterscheid GmbH, 53797 Lohmar (DE)
(72) Erfinder: Nienhaus, Clemens, 53819 Neunkirchen-Seelscheid (DE)
(74) Vertreter: Harwardt, Günther, Dipl.-Ing.

(57) **Zusammenfassung**

Die Erfindung betrifft eine Drehdurchführung für eine Vorrichtung zum Füllen eines zu einem Traktorrad gehörenden Reifens mit Luft oder zum Entlüften desselben. Diese umfasst ein Gehäuse 13 und ein darin mit radialem Abstand angeordnetes Innenteil 28. Der radiale Zwischenraum ist durch zwei radial beabstandete Abschlusselemente überbrückt. Das Innenteil 28 ist in den Abschlusselementen 18, 22 gelagert. Dem Innenteil 28 sind zwei Dichtungskombinationen aus jeweils einem ersten Dichtring 35 und einem zweiten Dichtring 41 spiegelsymmetrisch zugeordnet. Die ersten Dichtringe 35 liegen mit einer ersten Dichtfläche 36 gegen eine Gegendichtfläche 21 bzw. 25 der Abschlusselemente 18, 22. Jeder erste Dichtring 35 ist axial beweglich entlang der Längsachse Y und in Drehrichtung um diese fest mit dem Innenteil 28 verbunden. Jeder erste Dichtring 35 wird durch einen zweiten Dichtring 41 beaufschlagt, der mit einer Ringkante seines Dichtabschnittes 43 gegen die zweite Dichtfläche 36 des ersten Dichtrings 35 anliegt und diesen unter dem in der Kammer K herrschenden Druck gegen die Gegendichtfläche 21 bzw. 25 drückt.

## Beschreibung

Die Erfindung betrifft eine Drehdurchführung für eine Vorrichtung zum Füllen eines zu einem Fahrzeugrad, insbesondere Traktorrad gehörenden Reifens mit Luft oder zum Entlüften desselben.

Bei Traktoren ist eine Veränderung des Luftdrucks im Reifen besonders von Bedeutung, da bei der Arbeit auf dem Feld mit einem niedrigeren Reifendruck eine geringere Bodenverdichtung und darüber hinaus eine höhere Traktion erzielbar sind. Bei für Traktoren hohen Geschwindigkeiten, z.B. 40 km/h, mit niedrigem Luftdruck ist jedoch eine Fahrstabilität nicht gewährleistet. Der Fachzeitschrift profi-magazin für agrartechnik, 10/1995 "Der Luftdruck im Reifen: Kleine Ursache, große Wirkung" sind verschiedene Regelanlagen zu entnehmen. Danach sind die Drehübertrager entweder je nach Achstyp an der Innen- oder Außenseite des Rades dem Radflansch zugeordnet. Bei preiswerteren Systemen erfolgt die Luftzuführung außen am Reifen vorbei bis zur Drehdurchführung. Bei der Anordnung als Zwischenflansch zwischen dem Rad und dem Radflansch erfolgt die Befestigung der Drehdurchführung über die Radschrauben. Diese Ausführung hat den Vorteil, daß keine außen freiliegenden Leitungen vorhanden sind. Die jedoch ohnehin kritische Schraubverbindung wird durch die vergrößerte freie Biegelänge der Radschrauben noch höher belastet.

In der US 4 804 027 ist eine Vorrichtung zum Befüllen und Entlüften eines zu einem Rad eines Fahrzeugs gehörenden und mit Luft befüllbaren Reifens beschrieben, die in die Radnabe die den Radflansch trägt, integriert ist. Die Radnabe bildet das Außenteil mit einem Kanal, an welchen eine Verbindungsleitung anschließbar ist, die zum Reifen führt. In der Nabe ist ein Innenteil gelagert, welches ortsfest gehalten ist und mit einem Anschluß zu einer Druckversorgung versehen ist. Zwei dem Innenteil fest zugeordnete und zueinander beabstandete Dichtungen schließen zusammen mit einer Ventilanordnung eine Ringkammer ab. Es handelt sich um ein federbelastetes Ventil, das bei Überschreiten eines bestimmten Druckes in der Kammer geöffnet wird und die Luft in den Kanal der Radnabe strömen lässt. Das Ventil ist jedoch so ausgebildet, daß es erst öffnet, wenn die Dichtungen sich gegen die entsprechende radial außen liegende Bohrungsfläche der Radnabe angelegt haben. Die Dichtungen werden stets mit dem vollen Druck, der zum Füllen des Reifens anliegt, gegen die entsprechende Gegenfläche der Radnabe angepresst. Bei hohen Relativgeschwindigkeiten ist dies von Nachteil, da der hohe Druck zu einer starken Reibung und damit auch zu einer entsprechend hohen Abnutzung der Dichtungen führt. Ein weiterer Nachteil besteht darin, die Nabe und das Innenteil unabhängig voneinander an einem weiterem Bauteil gelagert sind, so daß radiale Abweichungen sich voll auf die Dichtungen auswirken.

Die DE OS 1 605 743 beschreibt eine Vorrichtung zum Regeln des Reifendruckes bei Kraftfahrzeugen. Sie beschreibt ferner eine Drehdurchführung mit einem Außenteil und einem Innenteil, welche relativ zueinander drehbar und mit Berührungsdichtungen zueinander abgedichtet sind, und ständig einer Relativbewegung unterliegen.

Eine Reifenfüllanlage ist beispielsweise auch in der DE-OS 1 907 082 beschrieben. Aus dieser ist auch bereits herleitbar, daß es für Fahrzeuge mit relativ hohen Umfangsgeschwindigkeiten notwendig ist, die Drehdurchführung während des Normalbetriebes, d.h. während der Nichtbetätigung der Reifenfüllanlage so zu schalten, daß kein Druck ansteht, da erkannt wurde, daß Probleme an den Dichtelementen der Drehverbindung auftreten. Diese Problematik wird besonders deutlich, wenn große Relativgeschwindigkeiten vorhanden sind, wie das beispielsweise beim Einsatz bei Traktoren der Fall ist.

Bei allen vorgenannten und zum Stand der Technik zählenden Anordnungen sind die Dichtungen, die als Weichdichtungen gestaltet sind, einem hohen Verschleiß an ihren Dichtlippen unterworfen, was zu einer kurzen Lebensdauer führt.

Der Erfindung liegt die Aufgabe zugrunde, eine Drehdurchführung vorzuschlagen, bei der eine sichere Abdichtung über eine lange Lebensdauer erzielt wird.

Gelöst wird diese Aufgabe durch eine Drehdurchführung für eine Vorrichtung zum Füllen eines zu einem Fahrzeugrad, insbesondere Traktorrad, gehörenden Reifens mit Luft oder zum Entlüften desselben, gekennzeichnet durch
- ein Gehäuse
   - mit einer auf einer Längsachse zentrierten Gehäusebohrung, die eine Innenfläche bildet, und
   - mit einer ersten Anschlussbohrung,
- ein Innenteil,
   - das in der Gehäusebohrung angeordnet ist,
   - das eine Außenfläche aufweist und
   - das mit der Außenfläche radial beabstandet zu der Innenfläche angeordnet ist,
- zwei Abschlusselemente,
   - die axial mit einem Abstand voneinander angeordnet sind,
   - die den radialen Abstand zwischen der Innenfläche des Gehäuses und dem Innenteil überbrücken,
   - die das Gehäuse und das Innenteil umeinander drehbar lagern und zusammen mit diesen eine Kammer umschließen sowie zur Kammer hin eine Gegendichtfläche bilden und
   - von denen zumindest ein Anschlusselement ein vom Gehäuse und Innenteil getrenntes Bauteil darstellt,
- eine Dichtungsanordnung in der Kammer
   - mit je Abschlusselement einem ersten Dichtring, der eine radial verlaufende erste Dichtfläche zur dichtenden axialen Anlage an der Gegendichtfläche des zugehörigen Abschlusselementes und eine parallel zur ersten Dichtfläche verlaufende zweite Dichtfläche aufweist und der entlang der Längsachse axial verschiebbar geführt ist, und
   - mit je Abschlusselement einem zweiten Dichtring, der einen ringförmigen Befestigungsabschnitt und einen daran ansetzenden ringmembranartigen Dichtabschnitt aufweist, der mit einer dem Befestigungsabschnitt entfernten Ringkante, dem Befestigungsabschnitt abgewandt, axial an der zweiten Dichtfläche des ersten Dichtringes anliegt.

Von Vorteil bei dieser Ausbildung ist, dass zwischen den als Weichdichtung ausgebildeten zweiten Dichtringen und den zweiten Dichtflächen des ersten Dichtringes keine Drehzahldifferenz gegeben ist, so dass sie praktisch keinem Verschleiß unterliegen. Die ersten Dichtringe sind insbesondere formstabil gestaltet und besitzen eine plane erste Dichtfläche, die gegen die entsprechende Gegendichtfläche des zugehörigen Abschlusselementes anliegt. Vorzugsweise ist der erste Dichtring aus einem formstabilen Kunststoff hergestellt. Es ist jedoch auch eine Ausbildung mit einem Basisring aus Kunststoff oder Metall möglich, welcher eine Beschichtung zumindest an der ersten Dichtfläche trägt. Über die ersten Dichtringe wird der Radialspalt zum Abschlusselement und über die zweiten Dichtringe, der Axialspalt zwischen jedem ersten Dichtring und dem Bauteil, dem die zweiten Dichtringe zugeordnet sind, abgedichtet. Der Dichtabschnitt des zweiten Dichtringes beaufschlagt den ersten Dichtring in axialer Richtung zur Anlage gegen die Gegendichtfläche des zugehörigen Abschlusselementes. Dies erfolgt unter dem in der Kammer herrschenden Druck, wobei, da der erste Dichtring entlang der Längsachse verschiebbar angeordnet ist, er so in Anlage zum Abschlusselement gehalten wird, dass auch ein Verschleißausgleich erfolgen kann. Der Dichtabschnitt des zweiten Dichtringes kann so ausgelegt werden, dass seine freie Ringkante, die zur Anlage gegen die zweite Dichtfläche des ersten Dichtringes kommt, auch noch bei dem gewünschten Verschleißausgleich wirksam in Anlage zur zweiten Dichtfläche des ersten Dichtringes gehalten wird.

Vorzugsweise sind die zur Dichtungsanordnung in der Kammer gehörenden Bauteile, nämlich die ersten Dichtringe und die zweiten Dichtringe, dem Innenteil zugeordnet. Dabei sind die ersten Dichtringe axial verschiebbar und die zweiten Dichtringe mit ihrem Befestigungsabschnitt ortsfest am Innenteil angebracht. Die ersten Dichtringe sind in Drehrichtung um die Längsachse fest mit dem Innenteil zu verbinden, um eindeutige Bewegungsverhältnisse zu erzielen, d.h. es soll verhindert werden, dass eine Relativbewegung in Umfangsrichtung zwischen dem ersten Dichtring und dem zweiten Dichtring entsteht.

Für den Fall der Zuordnung der Dichtungsanordnung zum Innenteil ist vorgesehen, dass die Abschlusselemente mit dem Gehäuse verbunden sind. Dabei bietet es sich an, ein Abschlusselement einstückig und fest mit dem Gehäuse zu verbinden und das andere Abschlusselement lösbar mit demselben zu verbinden. Die lösbare Anordnung eines Abschlusselementes ist erforderlich, um die zur Drehdurchführung gehörenden Bauteile montieren zu können.

Um die Anpressverhältnisse hinsichtlich der Anlage des ersten Dichtringes mit seiner ersten Dichtfläche an der Gegendichtfläche des zugehörigen Abschlusselementes so auslegen zu können, dass bei den herrschenden Druckverhältnissen in der Kammer keine Überbeanspruchung und kein übermäßiger Verschleiß erfolgt, jedoch die erforderliche Dichtigkeit erzielt wird, ist vorgesehen, dass die erste Dichtfläche des ersten Dichtringes als Ringfläche gestaltet ist und einen kleinen Durchmesser und einen großen Durchmesser aufweist, dass der erste Dichtring ferner einen Innendurchmesser und einen Außendurchmesser aufweist, und dass bei Zuordnung des ersten Dichtringes zum Innenteil der kleine Durchmesser gleich/größer als der Innendurchmesser und der große Durchmesser gleich/kleiner als der Außendurchmesser ist, wobei die erste Dichtfläche kleiner als eine vom Innendurchmesser und Außendurchmesser begrenzte Ringfläche ist. Der auf die Ringfläche des ersten Dichtringes, die die Entlastungskammer begrenzt, einwirkende Druck wirkt dabei dem auf den Dichtabschnitt des zweiten Dichtringes und die Restfläche der zweiten Dichtfläche des ersten Dichtringes, die nicht vom Dichtabschnitt der zweiten Dichtung abgedeckt ist, in Belastungsrichtung einwirkenden Druck entgegen, wobei die Entlastungskammer dem gleichen Druck unterliegt wie die Kammer. Durch eine Veränderung der Lage der ersten Dichtfläche in radialer Richtung, d.h. durch unterschiedliche Größenauslegung des kleinen Durchmessers und entsprechender Veränderung des großen Durchmessers bei beispielsweise gleichem Flächeninhalt können die resultierenden Anpresskräfte des ersten Dichtringes mit seiner ersten Dichtfläche gegen die zugehörige Gegendichtfläche und daraus folgend die Flächenpressung verändert werden.

In Ausgestaltung der Erfindung ist vorgesehen, dass bei Zuordnung des ersten Dichtringes zum Innenteil und Auslegung des großen Durchmesser auf einen Wert kleiner als der Außendurchmesser zwischen diesen und der Gegendichtfläche des zugehörigen Abschlusselementes eine Entlastungskammer gebildet ist, die mit der Kammer verbunden ist, so dass sie mit dem gleichen Druck wie diese beaufschlagt ist. Bei dieser Anordnung ist die erste Dichtfläche stets kleiner als die Fläche, welche vom Innendurchmesser und Außendurchmesser begrenzt ist.

Um die Reibung hinsichtlich der Lagerung des Innenteils im Gehäuse klein zu halten, ist den Abschlusselementen jeweils ein Gleitlagerelement zugeordnet.

In der Zeichnung sind die Zuordnung einer Drehdurchführung zu einem Traktorrad und die Gestaltung der Drehdurchführung schematisch dargestellt.

Es zeigt
- Figur 1: einen Schnitt durch ein Traktorrad in Zuordnung zu einem Achsgehäuse eines Traktors,
- Figur 2: einen Längsschnitt durch eine Drehdurchführung gemäß der Erfindung mit einer ersten Ausführungsform von ersten Dichtringen,
- Figur 3: einen Halblängsschnitt durch einen ersten Dichtungsring, wie er bei der Ausführungsform gemäß Figur 2 eingebaut ist und
- Figur 4: einen Halblängsschnitt durch eine zweite Ausführungsform des ersten Dichtringes.

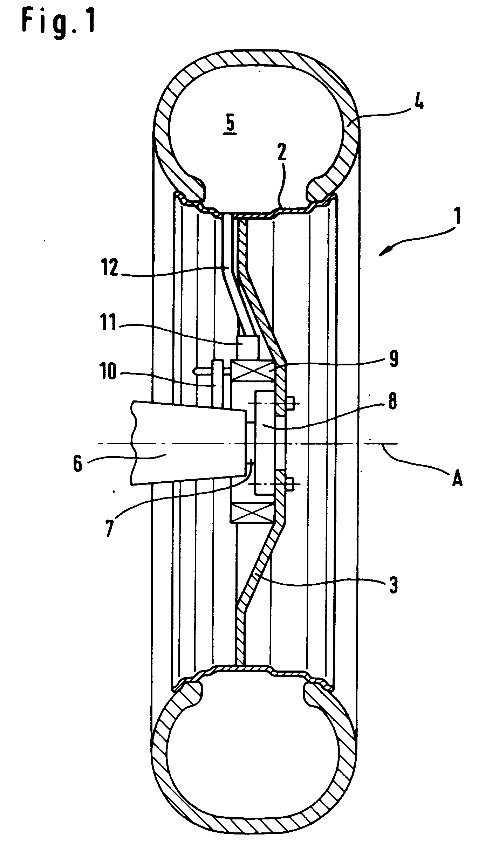

Das in Figur 1 dargestellte Traktorrad 1 umfasst eine Felge 2, einen die Felge 2 tragenden Radkörper 3 und einen der Felge 2 zugeordneten Reifen 4. Der Innenraum 5 wird durch den Reifen 4 und den Radkörper 3 umschlossen. Das Traktorrad 1 ist dem nur teilweise dargestellten Achskörper 6 eines Traktors zugeordnet. Es ist insbesondere an dem Flansch 8 der Achswelle 7 befestigt. Dem Radkörper 3 ist ferner die Drehdurchführung 9 zugeordnet, deren Innenteil über eine Halterung 10, welche beispielsweise am Achskörper 6 festgelegt ist, ortsfest gehalten ist, während das Außenteil der Drehdurchführung 9 mit dem Traktorrad 1 rotiert. An das Außenteil der Drehdurchführung 9 ist das Ventil 11 angeschlossen. Dieses ist über eine Luftleitung 12 mit dem Innenraum 5 verbunden. Die Zuführung von Druckluft erfolgt über die Halterung 10 zu der Drehdurchführung 9 und von dieser über das Ventil und die Luftleitung 12 zum Innenraum 5.

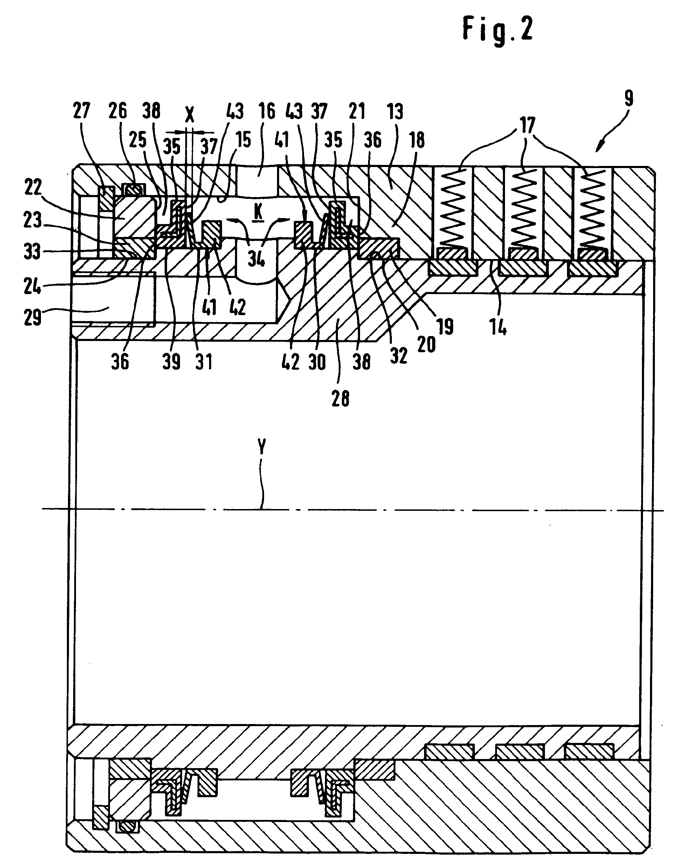

Die Ausbildung der Drehdurchführung 9 ist anhand der Figuren 2 bis 4 näher erläutert.

Die Drehdurchführung 9 umfasst das Gehäuse 13, in dem sich eine Bohrung 14 sowie eine im Durchmesser gegenüber dieser vergrösserte Gehäusebohrung 15 befindet. Die Gehäusebohrung 15 ist zu der linken Stirnfläche des Gehäuses 13 offen. Im Bereich der Gehäusebohrung 15 befindet sich eine erste Anschlussbohrung 16, die die Wand des Gehäuses 13 im Bereich der Gehäusebohrung 15 durchsetzt und den Anschluss zu dem aus Figur 1 ersichtlichen Ventil darstellt.

An dem Gehäuse 13 sind ferner Schleifringübertrager 17 angeordnet, die zur Übertragung von Signalen an das Ventil dienen. Die Gehäusebohrung 15 wird durch ein erstes Abschlusselement 18, welches ein erstes Gleitlagerelement 19 mit der ersten Lagerbohrung 20 trägt und ein zweites Abschlusselement 22, das ein vom Gehäuse 13 separates Teil darstellt, abgeschlossen. Das erste Abschlusselement 18 bildet eine erste Gegendichtfläche 21. Das zweite Abschlusselement 22 weist der ersten Gegendichtfläche 21 gegenüberliegend eine zweite Gegendichtfläche 25 auf. Das zweite Abschlusselement 22 trägt ein zweites Gleitlagerelement 23 mit der zweiten Lagerbohrung 24. In einer Nut des Gehäuses 13 sitzt eine Dichtung 26 in Form eines O-ringes, die zur Abdichtung zwischen dem zweiten Abschlusselement 22 und dem Gehäuse 13 dient. Die beiden Abschlusselemente 18, 22 sind im axialen Abstand zueinander angeordnet. Das vom Gehäuse 13 lösbare zweite Abschlusselement 22 ist durch einen Sicherungsring 27 in seiner axialen Position gehalten.

In dem Gehäuse 13 ist das Innenteil 28 gelagert. Das Innenteil 28 weist einen Luftkanal 29 auf, der zu der von dem Gehäuse 13, dem Innenteil 28 und den beiden Abschlusselementen 18, 22 umschlossenen Kammer K führt. Die Druckbeaufschlagung der Kammer K erfolgt über den Luftkanal 29 von einem nicht dargestellten und am Traktor ortsfest angebrachten Druckluftreservoir oder Kompressor . Das Innenteil 28 besitzt einen Abschnitt, der in der Bohrung 14 sitzt und zu den Ringübertragern 17 gehörende Bauteile zur Übertragung von Signalen umfasst.

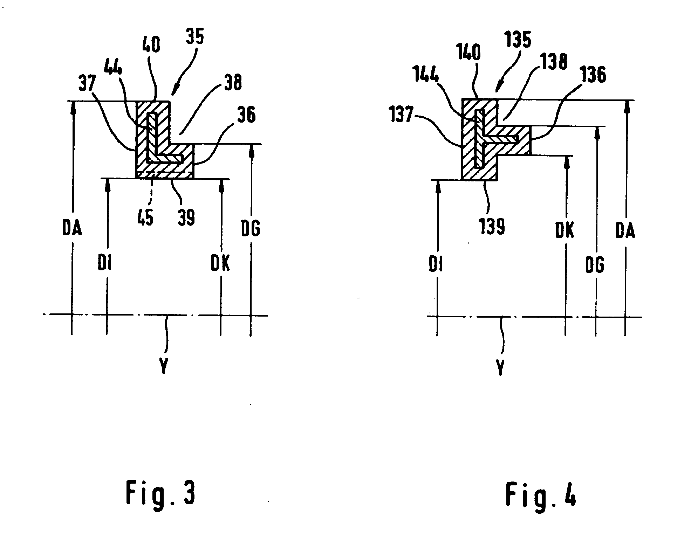

Im Bereich des ersten Abschlusselementes 18 besitzt das Innenteil 28 eine erste Sitzfläche 30 und nahe zum zweiten Abschlusselement 22 eine zweite Sitzfläche 31. Ferner besitzt es im Durchmesser zu der ersten Sitzfläche 30 und zweiten Sitzfläche 31 abgestuft eine erste Lagerfläche 32 und eine zweite Lagerfläche 33. Mit der ersten Lagerfläche 32 ist das Innenteil 28 in der ersten Lagerbohrung 20 des ersten Gleitlagerelementes 19 und mit der zweiten Lagerfläche 33 in der zweiten Lagerbohrung 24 des zum zweiten Abschlusselementes 22 gehörenden zweiten Gleitlagerelementes 23 gelagert. Auf der ersten Sitzfläche 30 und der zweiten Sitzfläche 31 sind jeweils in spiegelbildlicher Anordnung ein erster Dichtungsring 35 und ein zweiter Dichtungsring 41 angeordnet. Die beiden ersten Dichtringe 35 sind gemäß Figur 3 gestaltet.

Die weitere Beschreibung der ersten Dichtringe 35 erfolgt anhand Figur 3. Die beiden ersten Dichtringe 35 wirken mit einer ersten Dichtfläche 36 mit der entsprechenden ersten Gegendichtfläche 21 bzw. zweiten Gegendichtfläche 25 zusammen. Parallel zur radial verlaufenden ersten Dichtfläche 36 weist der erste Dichtring 35 eine zweite Dichtfläche 37 auf, die der ersten Dichtfläche 36 abgewandt ist und einen größeren Flächeninhalt als diese aufweist. Die ersten Dichtringe 35 gemäß Figuren 2 und 3 weisen eine erste Dichtfläche 36 auf, die einen kleinen Durchmesser DK besitzt, der dem Innendurchmesser Dl des ersten Dichtringes 35 entspricht. Die ersten Dichtringe 35 sind mit der Bohrung 39 mit dem Innendurchmesser Dl auf der ersten Sitzfläche 30 bzw. zweiten Sitzfläche 31 angeordnet, und zwar dergestalt, dass sie in Richtung der Längsachse Y verstellbar sind, in Drehrichtung jedoch um die Achse Y sich mit dem Innenteil 28 drehen müssen. Dies kann beispielsweise durch die Anordnung einer oder mehreren axial verlaufenden Nuten 45 im ersten Dichtring 35 erfolgen, welche mit einem in die erste Sitzfläche 30 und zweite Sitzfläche 31 teilweise eingelassenen und sich parallel zur Längsachse Y erstreckenden und nicht dargestelltem Keil zusammenwirken.

Da der Großdurchmesser DG des ersten Dichtringes 35 kleiner als der Außendurchmesser DA des ersten Dichtringes 35 ist, ergibt sich zwischen der ersten Gegendichtfläche 21 und der zweiten Gegendichtfläche 25 und den diesen jeweils zugeordneten ersten Dichtringen 35 eine Entlastungskammer 38. Diese Entlastungskammern 38 sind mit der Kammer K verbunden, da der Außendurchmesser DA der ersten Dichtringe 35 kleiner ist als der Durchmesser der Gehäusebohrung 15. Ein in der Kammer K herrschender Druck setzt sich also in die Entlastungskammern 38 fort. Die Ringfläche zwischen dem großen Durchmesser DG und dem Außendurchmesser DA im Bereich der Kammer versucht also unter dem in der Kammer K herrschenden Druck die ersten Dichtringe 35 von der zugehörigen Gegendichtfläche 21 bzw. 25 abzuheben. Die ersten Dichtringe 35 werden jedoch durch die Vorspannkraft der Dichtabschnitte 43 der zweiten Dichtringe 41 und den auf diese wirkenden Druck in der Kammer K beaufschlagt, so dass sie entsprechend an die Gegendichtfläche 21 bzw. 25 mit ihrer ersten Dichtfläche 36 angedrückt werden. Dabei wirkt die Restfläche außerhalb der Ringkante des Dichtabschnittes 43 bis zur Außenfläche 40 mit dem Außendurchmesser DA praktisch nicht unterstützend, weil im Bereich der Entlastungskammer 38 eine entsprechend große entlastend wirkende Fläche entsteht. Das ist jedoch anders, wenn der große Durchmesser DG der ersten Dichtfläche 36 größenmäßig dem Außendurchmesser DA des ersten Dichtringes 35 entspricht. Die beiden zweiten Dichtringe 41 sind mit ihrem Befestigungsabschnitt 42 auf der ersten Sitzfläche 30 bzw. zweiten Sitzfläche 31 fest angeordnet. Der Dichtabschnitt 43 setzt jeweils nahe zur zugehörigen Sitzfläche 30 bzw. 31 an und erstreckt sich von dort geneigt in Richtung zur zweiten Dichtfläche 37 und liegt dort mit einer gewissen Vorspannung an. Reicht diese Vorspannung nicht, können Federn vorgesehen sein, die die beiden ersten Dichtringe 35 in Anlage zu der zugehörigen Gegendichtfläche 21 bzw. 25 der Abschlusselemente 18 bzw. 22 drücken. Da die beiden zweiten Dichtringe 41 und die zugehörigen ersten Dichtringe 35 drehfest mit dem Innenteil 28 verbunden sind, tritt zwischen beiden keine Relativdrehung auf. Die Dichtabschnitte 43 der beiden zweiten Dichtringe 41 erlauben einen bestimmten Axialweg, so dass bei Verschleiß der ersten Dichtflächen 36 der beiden ersten Dichtringe 35 jeweils eine Nachstellung in Axialrichtung um den Verschleißweg X möglich ist.

Dann, wenn das Innenteil 28 gegenüber dem Gehäuse 13 eine Relativdrehbewegung um die Längsachse Y erfährt, tritt zwischen der relativ weich ausgebildeten Ringkante des Dichtabschnittes 43 des zweiten Dichtrings 41 in Drehrichtung um die Längsachse Y keine Relativbewegung in Drehrichtung zu der zweiten Dichtfläche 37 des ersten Dichtringes 35 auf. Der Verschleiß ist auf die erste Dichtfläche 36 hin verlegt. Der Verschleißausgleich um den Weg X, der auch von dem Dichtabschnitt 43 mitgemacht wird, erlaubt eine hohe Lebensdauer.

Die Anpressverhältnisse des ersten Dichtringes 35 mit seiner ersten Dichtfläche 36 an die ersten Gegendichtflächen 21 bzw. 25 können einerseits über die Größe, d.h. den Flächeninhalt, der ersten Dichtfläche 36 und deren radialer Anordnung zwischen dem Innendurchmesser Dl und dem Außendurchmesser DA variiert werden. Es kann bei gleichgroßem Flächeninhalt der ersten Dichtfläche 36 wie bei Figur 3 eine Anordnung gemäß Figur 4 getroffen werden, so dass sich eine erste Dichtfläche 136 ergibt, die als Ringfläche gestaltet, den gleichen Flächeninhalt aufweist wie die Dichtfläche 36 bei der Ausführungsform gemäß Figur 3. Sie ist jedoch auf einem anderen Durchmesser angeordnet ist, d.h. der kleine Durchmesser DK ist größer als der Innendurchmesser Dl und der große Durchmesser DG ist unter Berücksichtung des Flächeninhaltes entsprechend größer als der kleine Durchmesser DK. Damit nimmt auch die vom Druck in der Kammer K beaufschlagte Entlastungskammer 138, d.h. die zur Außenfläche verbleibende Ringfläche, ab. Die entlastend wirkende Fläche zwischen dem großen Durchmesser DG und dem Außendurchmesser DA wird kleiner als die bei der Ausführungsform gemäß Figur 3. Der auf den ringförmigen Dichtabschnitt 43 des zweiten Dichtrings 41 und die Restfläche zwischen der äußeren Ringkante des Dichtabschnittes 43, mit dem der zweite Dichtring 41 an der zweiten Dichtfläche 144 anliegt, und dem Außendurchmesser DA der Außenfläche 140 einwirkende Druck führt zu einer höheren Anpressung des ersten Dichtringes 135 mit seiner ersten Dichtfläche 136 gegen die entsprechende Gegendichtfläche der beiden Abschlusselemente als dies der Fall bei der Ausbildung gemäß Figur 3 ist. Entsprechend den gewünschten Anpressverhältnissen kann also die erste Dichtfläche 136 maximal so radial nach außen von der Längsachse Y verlagert werden, dass deren großer Durchmesser DG dem Außendurchmesser DA entspricht, so dass praktisch die gesamte Fläche des Dichtabschnittes und die gegebenenfalls vorhandene Restfläche unter dem Druck eine hohe Anpresskraft erzeugen, weil keine Entlastungskammer entsteht.

Aus den beiden Figuren 3 und 4 ist auch erkennbar, dass zur Verstärkung der beiden ersten Dichtringe 35, 135 eine Verstärkungseinlage 140, 144 benutzt werden kann, um eine hohe Stabilität zu erreichen, so dass gewährleistet ist, dass die erste Dichtfläche 36 bzw. 136 auch über eine lange Lebensdauer eine exakte Anlage zu der entsprechenden Gegendichtfläche aufrechterhält. Im Extremfall kann die Verstärkungseinlage 44, 144 als Blechring gestaltet sein, der mit einer reibungsarmen Beschichtung aus Kunststoff versehen ist, die im Bereich der beiden Dichtflächen 36, 136 bzw. 37, 137 bearbeitet sein kann.

### Bezugszeichenliste

- 1: Rad
- 2: Felge
- 3: Radkörper
- 4: Reifen
- 5: Innenraum
- 6: Achskörper
- 7: Achswelle
- 8: Flansch
- 9: Drehdurchführung
- 10: Halterung
- 11: Ventil
- 12: Luftleitung
- 13: Gehäuse
- 14: Bohrung
- 15: Gehäusebohrung
- 16: erste Anschlussbohrung
- 17: Schleifringübertrager
- 18: erstes Abschlusselement
- 19: erstes Gleitlagerelement
- 20: erste Lagerbohrung
- 21: erste Gegendichtfläche
- 22: zweites Abschlusselement
- 23: zweites Gleitlagerelement
- 24: zweite Lagerbohrung
- 25: zweite Gegendichtfläche
- 26: Dichtung
- 27: Sicherungsring
- 28: Innenteil
- 29: Luftkanal
- 30: erste Sitzfläche
- 31: zweite Sitzfläche
- 32: erste Lagerfläche
- 33: zweite Lagerfläche
- 34: Dichtungsanordnung
- 35, 135: erster Dichtring
- 36, 136: erste Dichtfläche
- 37, 137: zweite Dichtfläche
- 38, 138: Entlastungskammer
- 39, 139: Bohrung
- 40, 140: Außenfläche
- 41: zweiter Dichtring
- 42: Betätigungsabschnitt
- 43: Dichtabschnitt
- 44, 144: Verstärkungseinlage
- 45: Nut

- A: Drehachse
- DA: Außendurchmesser
- DG: großer Durchmesser
- DI: Innendurchmesser
- DK: kleiner Durchmesser
- K: Kammer
- X: Verschleißweg
- Y: Längsachse

## Patentansprüche

1. Drehdurchführung (9) für eine Vorrichtung zum Füllen eines zu einem Fahrzeugrad, insbesondere Traktorrad (1), gehörenden Reifens (4) mit Luft oder zum Entlüften desselben, **gekennzeichnet durch**
- ein Gehäuse(13)
- mit einer auf einer Längsachse (Y) zentrierten Gehäusebohrung (15), die eine Innenfläche bildet, und
- mit einer ersten Anschlussbohrung (16),
- ein Innenteil (28),
- das in der Gehäusebohrung (15) angeordnet ist,
- das eine Außenfläche aufweist und
- das mit der Außenfläche radial beabstandet zu der Innenfläche angeordnet ist,
- zwei Abschlusselemente (18, 22),
- die axial mit einem Abstand voneinander angeordnet sind,
- die den radialen Abstand zwischen der Innenfläche des Gehäuses (13) und dem Innenteil (28) überbrücken,
- die das Gehäuse (13) und das Innenteil (28) umeinander drehbar lagern und zusammen mit diesen eine Kammer (K) umschließen sowie zur Kammer (K) hin eine Gegendichtfläche (21, 25) bilden und
- von denen zumindest ein Anschlusselement (22) ein vom Gehäuse (13) und Innenteil (28) getrenntes Bauteil darstellt,
- eine Dichtungsanordnung (34) in der Kammer (K)
- mit je Abschlusselement (18, 22) einem ersten Dichtring (35, 135), der eine radial verlaufende erste Dichtfläche (36, 136) zur dichtenden axialen Anlage an der Gegendichtfläche (21, 25) des zugehörigen Abschlusselementes (18, 22) und eine parallel zur ersten Dichtfläche (36, 136) verlaufende zweite Dichtfläche (37, 137) aufweist und der entlang der Längsachse (Y) axial verschiebbar geführt ist, und
- mit je Abschlusselement (18, 22) einem zweiten Dichtring (41), der einen ringförmigen Befestigungsabschnitt (42) und einen daran ansetzenden ringmembranartigen Dichtabschnitt (43) aufweist, der mit einer dem Befestigungsabschnitt (42) entfernten Ringkante, dem Befestigungsabschnitt (42) abgewandt, axial an der zweiten Dichtfläche (37, 137) des ersten Dichtringes (35, 135) anliegt.

2. Drehdurchführung nach Anspruch 1,
**dadurch gekennzeichnet,**
**dass** die zur Dichtungsanordnung (34) in der Kammer (K) gehörenden ersten Dichtringe (35, 135) und zweiten Dichtringe (41) dem Innenteil (28) zugeordnet sind, wobei die ersten Dichtringe (35, 135) axial verschiebbar und die zweiten Dichtringe (41) mit ihrem Befestigungsabschnitt (42) ortsfest am Innenteil (28) angebracht sind.

3. Drehdurchführung nach einem der Ansprüche 1 oder 2,
**dadurch gekennzeichnet,**
**dass** die ersten Dichtringe (35, 135) axial in Richtung der Längsachse (Y) verschiebbar und in Drehrichtung um die Längsachse (Y) fest mit dem Innenteil (28) verbunden sind.

4. Drehdurchführung nach Anspruch 2,
**dadurch gekennzeichnet,**
**dass** die Abschlusselemente (18, 22) mit dem Gehäuse (13) verbunden sind.

5. Drehdurchführung nach Anspruch 4,
**dadurch gekennzeichnet,**
**dass** ein Abschlusselement (18) fest und ein Abschlusselement (22) lösbar mit dem Gehäuse (13) verbunden ist.

6. Drehdurchführung nach Anspruch 1,
**dadurch gekennzeichnet,**
**dass** die erste Dichtfläche (36, 136) des ersten Dichtringes (35, 135) als Ringfläche gestaltet ist und einen kleinen Durchmesser (DK) und einen großen Durchmesser (DG) aufweist,
**dass** der erste Dichtring (35, 135) ferner einen Innendurchmesser (Dl) und einen Außendurchmesser (DA) aufweist,
und **dass** bei Zuordnung des ersten Dichtringes (35, 135) zum Innenteil (28) der kleine Durchmesser (DK) gleich/größer als der Innendurchmesser (Dl) und der große Durchmesser (DG) gleich/kleiner als der Außendurchmesser (DA) ist, wobei die erste Dichtfläche (36, 136) kleiner als eine vom Innendurchmesser (Dl) und Außendurchmesser (DA) begrenzte Ringfläche ist.

7. Drehdurchführung nach Anspruch 6,
**dadurch gekennzeichnet,**
**dass** bei Zuordnung des ersten Dichtringes (35, 135) zum Innenteil (28) und Auslegung des großen Durchmesser (DG) auf einen Wert kleiner als der Außendurchmesser (DA) zwischen diesen und der Gegendichtfläche (21, 25) des zugehörigen Abschlusselementes (18, 22) eine Entlastungskammer (38, 138) gebildet ist, die mit der Kammer (K) verbunden ist, so dass sie mit dem gleichen Druck wie diese beaufschlagt ist.

8. Drehdurchführung nach Anspruch 1,
**dadurch gekennzeichnet,**
**dass** die Abschlusselemente (18, 22) ein Gleitlagerelement (19, 23) umfassen.
